# EUROPEAN PATENT APPLICATION

(11) **EP 4 546 520 A1**
(43) Date of publication of application: **30.04.2025**
(21) Application number: 23831691.3
(22) Date of filing: 17.04.2023
(51) Int. Cl.: H01M 50/186, H01M 50/105, H01M 10/647, H01M 10/613, H01M 10/6554, H01M 10/653, H01M 50/211

(54) **METHOD FOR MANUFACTURING BATTERY CELL, BATTERY CELL MANUFACTURED THEREBY, AND BATTERY MODULE INCLUDING SAME**

(30) Priority: 28.06.2022 KR 20220078560
(71) Applicant: SK On Co., Ltd., Seoul 03161 (KR)
(72) Inventor: CHO, Eun Soo, Daejeon 34124 (KR); KIM, Sung Yeop, Daejeon 34124 (KR); CHEON, Seung Hyeon, Daejeon 34124 (KR)
(74) Representative: Stolmár & Partner Patentanwälte PartG mbB
(86) International application number: PCT/KR2023/005177
(87) International publication number: WO 2024/005325

(57) **Abstract**

The present invention provides: a method for manufacturing a battery cell, wherein a folding part is formed in a sealing part of the battery cell, an attachment member is closely attached, along a side face of a case body and a folding face located on the outermost portion of a side of the case body, to suppress the deformation of the sealing part and delay venting, and the cooling efficiency of the battery cell is improved; a battery cell manufactured by the method; and a battery module including the battery cell.

## Description

### [Technical Field]

The present invention relates to a method for manufacturing a battery cell which suppresses deformation of a sealing portion, delays a venting phenomenon, and improves cooling efficiency, a battery cell manufactured thereby, and a battery module including the same.

### [Background Art]

As the electronics, communications, and space industries develop, demand for lithium secondary batteries as an energy power source is drastically increasing. In particular, as the importance of global eco-friendly policies is emphasized, the electric vehicle market is growing swiftly, and research and development on lithium secondary batteries are being actively conducted worldwide.

Among various secondary batteries, research and development is being conducted most actively on lithium secondary batteries that have high discharge voltage and energy density. These lithium secondary batteries are manufactured by accommodating an electrode assembly including an anode, a cathode, and a separator in a highly flexible pouch-type exterior material, and then heat-welding the edges of the pouch-type exterior material.

However, there was a problem that the heat-welded sealing portion was broken as the internal pressure of the battery cells increased. In order to strengthen the stability of the sealing portion, a method of folding the sealing portion or a method of taping the entire sides of the pouch-type exterior material on which the sealing portion was formed was introduced. However, even when the sealing portion was folded, there was still a problem that the sealing portion was easily broken due to the increase in the internal pressure of the battery cell. In addition, when the entire sides of the pouch-type exterior material was taped, there was a problem that the cooling effect of the battery cell was reduced due to the empty space formed between the pouch-type exterior material and the taping

Therefore, a method is required to suppress deformation of a sealing portion to delay the venting phenomenon without reducing the cooling effect of a battery cell.

### [Disclosure]

### [Technical Problem]

The present invention provides a method for manufacturing a battery cell in which a folding portion is formed in a sealing portion of a battery cell, and an attachment member is tightly adhered along a folding face positioned at the outermost side of a case body and a side face of the case body, thereby suppressing deformation of the sealing portion and delaying a venting phenomenon, and improving the cooling efficiency of the battery cell, a battery cell manufactured thereby, and a battery module including the same.

### [Technical Solution]

A method for manufacturing a battery cell according to the present invention includes: (a) preparing a battery cell including an electrode assembly, a case body accommodating the electrode assembly, a sealing portion formed by joining the edges of the case body, and a folding portion formed by folding the sealing portion; (b) providing an attachment member on a side portion of the case body in which the folding portion is formed; (c) performing an operation of adhering the attachment member of the Step (b) to a folding face positioned on the outermost side of the side portion of the case body by a first moving unit and an operation of adhering the attachment member of the Step (b) to a side face of the case body by a second moving unit; and (d) adhering the remaining attachment member extended from the attachment member adhered to the folding face and the side face of the case body in the Step (c) to the upper face and the lower face of the case body.

According to an embodiment, the Step (b) may include withdrawing the attachment member by a supply unit (b-1); and disposing the attachment member withdrawn in the Step (b-1) on the side portion of the case body by a stage unit (b-2).

According to an embodiment, the operation of adhering the attachment member of the Step (b) to the folding face and the operation of adhering the attachment member of the Step (b) to the side face may be performed simultaneously or sequentially.

According to an embodiment, the first moving unit and the second moving unit may be driven by a cylinder or a servo motor.

According to an embodiment, the angle formed by the first moving unit and the second moving unit in the Step (c) may be 0 to 30 degrees.

According to an embodiment, in the Step (c), the length of the end portion of the first moving unit in contact with the attachment member may correspond to the length of the folding face.

According to an embodiment, in the Step (c), the length of the end portion of the second moving unit in contact with the attachment member may correspond to the length of the side face.

According to an embodiment, the attachment member may be tightly adhered along the folding face and the side face of the case body by the operation of the Step (c).

According to an embodiment, the Step (d) may be to adhere the attachment member to the upper face of the case body by a first roller unit and to adhere the attachment member to the lower face of the case body by a second roller unit.

According to an embodiment, by repeatedly performing the Steps (a) to (d), the attachment member adhered to the battery cell is disposed in a multiple number to be spaced apart from each other along the length direction of the sealing portion.

A battery cell according to the present invention includes: an electrode assembly; a case body accommodating the electrode assembly; a sealing portion formed by joining the edges of the case body; a folding portion formed by folding the sealing portion; and an attachment member adhered on a side portion of the case body in which the folding portion is formed, wherein the attachment member is tightly adhered along a folding face positioned on the outermost side of the side portion of the case body and a side face of the case body.

According to an embodiment, the case body may include a lower case in which a cup portion accommodating the electrode assembly is formed and an upper case covering the lower case.

According to an embodiment, the side face of the case body may include a side face of the lower case.

According to an embodiment, the attachment member may be adhered to an outer surface of the lower case and an outer surface of the upper case.

According to an embodiment, the attachment member may be disposed in a multiple number to be spaced apart from each other along the length direction of the sealing portion.

A battery module according to the present invention includes the battery cell of the present invention as a unit cell.

According to an embodiment, the battery module may include a heat dissipation plate.

According to an embodiment, the battery module may include a gap filler disposed between the battery cell and the heat dissipation plate.

According to an embodiment, the gap filler may be filled so as to correspond to the shape of an attachment member adhered along a side face of a case body of the battery cell.

### [Advantageous Effects]

The manufacturing method of the present invention and a battery cell manufactured thereby have the effect of suppressing deformation of a sealing portion, since a folding portion is formed at the sealing portion to stably fix the sealing portion of the battery cell.

In addition, the manufacturing method of the present invention and a battery cell manufactured thereby can more stably fix the sealing portion due to an attachment member formed at the folding portion, and thus have the effect of maintaining the performance of the battery cell for a long period.

In particular, the manufacturing method of the present invention and a battery cell manufactured thereby introduce a structure where an attachment member is tightly adhered along a folding face positioned on the outermost side of a side portion of a case body and a side face of the case body so that an empty space (air pocket) is not formed between the attachment member and a cup portion accommodating an electrode assembly. Accordingly, in a battery module including the battery cell according to the present invention, a gap filler can come into contact with the cup portion accommodating an electrode assembly, and thus there is the effect of delaying a venting phenomenon where tight sealing of a case is released and improving the cooling efficiency of the battery cell.

### [Description of Drawings]

FIG. 1 shows a schematic flowchart of a method of manufacturing a battery cell according to one embodiment of the present invention.
FIG. 2 schematically illustrates a battery cell in which an electrode assembly is accommodated.
FIG. 3 schematically illustrates a cross-sectional view of a sealing portion of FIG. 2 taken along line A-A'.
FIG. 4 schematically illustrates an operation of providing an attachment member to a side portion of a case body in which a folding portion is formed.
FIG. 5 schematically illustrates an operation of adhering an attachment member to a folding face positioned on the outermost side of a side portion of a case body by a first moving unit and a second moving unit.
FIG. 6 schematically illustrates another embodiment of the operation of adhering an attachment member to a folding face positioned on the outermost side of a side portion of a case body by a first moving unit and a second moving unit.
FIG. 7 schematically illustrates an operation of adhering an attachment member to an upper face and a lower face of a case by a roller unit.
FIG. 8 schematically illustrates a battery cell in which multiple attachment members are disposed to be spaced apart from each other along the length direction of a sealing portion.
FIG. 9 shows a schematic cross-sectional diagram of a battery module including a plurality of battery cells according to one embodiment of the present invention.
FIG. 10 shows a photographic image of an empty space (air pocket) formed between an attachment member and a cup portion accommodating an electrode assembly and schematically illustrates an adhesion structure of the attachment member.
FIG. 11 shows photographic image of an attachment member tightly adhered to a folding face and a side face of a case body and schematically illustrates an adhesion structure of the attachment member.

### [Modes of the Invention]

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification of application. In addition, the technical principle of the present invention is not construed as being limited to the embodiments described in the present specification or application.

Hereinafter, a method for manufacturing a battery cell, a battery cell manufactured thereby, and a battery module including the same according to the present invention will be described in detail.

A method for manufacturing a battery cell according to the present invention includes: (a) preparing a battery cell including an electrode assembly, a case body accommodating the electrode assembly, a sealing portion formed by joining the edges of the case body, and a folding portion formed by folding the sealing portion; (b) providing an attachment member on a side portion of the case body in which the folding portion is formed; (c) performing an operation of adhering the attachment member of the Step (b) to a folding face positioned on the outermost side of the side portion of the case body by a first moving unit and an operation of adhering the attachment member of the Step (b) to a side face of the case body by a second moving unit; and (d) adhering the remaining attachment member extended from the attachment member adhered to the folding face and the side face of the case body in the Step (c) to the upper face and the lower face of the case body.

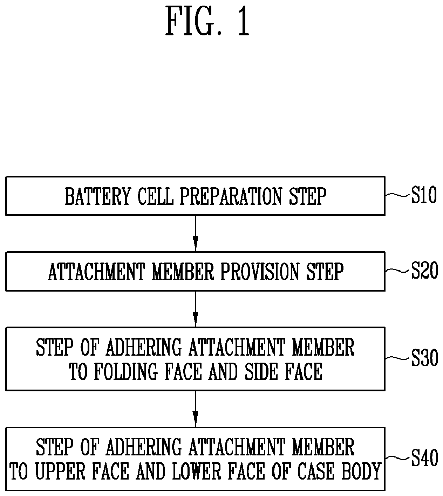

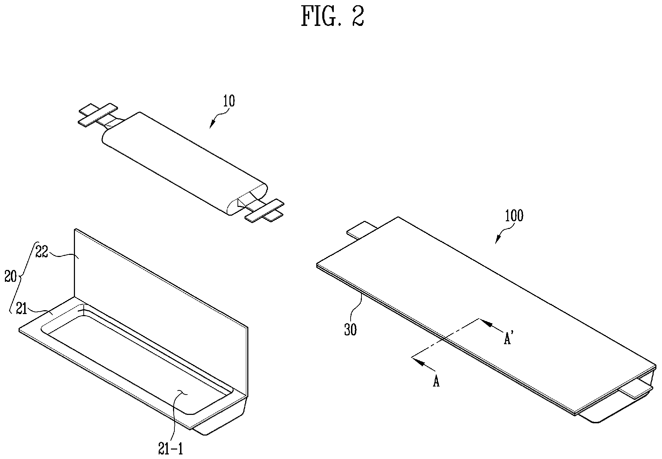

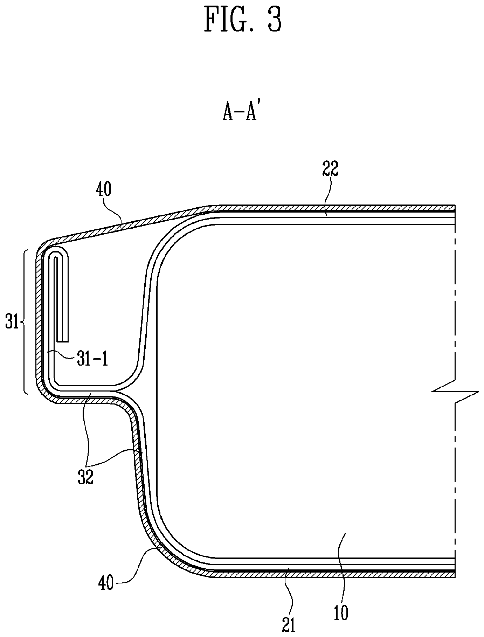

FIG. 1 shows a schematic flowchart of a method of manufacturing a battery cell according to one embodiment of the present invention, FIG. 2 schematically illustrates a battery cell in which an electrode assembly is accommodated, and FIG. 3 schematically illustrates a cross-sectional view of a sealing portion of FIG. 2 taken along line A-A'.

Referring to FIGS. 1 to 3, the method for manufacturing a battery cell includes a battery cell preparation step S10. In Step S10, a battery cell 100 including an electrode assembly 10, a case body 20 accommodating the electrode assembly 10, a sealing portion 30 formed by joining the edges of the case body 20, and a folding portion 31 formed by folding the sealing portion 30 is prepared.

An electrode assembly 10 may include a structure in which a cathode, an anode, and a separator interposed between the cathode and the anode are stacked. A cathode may include a cathode active material which lithium (Li) ions may be inserted to and extracted from, and an anode may include an anode active material which lithium (Li) ions may be absorbed to and extracted from. In addition, a cathode and an anode may further include a binder and a conductive material in each of a cathode active material and an anode active material to improve mechanical stability and electrical conductivity. A separator may be configured to prevent electrical short-circuit between a cathode and an anode and to generate a flow of ions. The type of the separator is not particularly limited, but may include a porous polymer film. An electrode assembly may be manufactured by alternately stacking a plurality of cathodes and anodes and interposing separators between the cathodes and anodes, by a stacking or zigzag stacking method.

A case body 20 serve to protect an electrode assembly 10 from the external environment. A case body 20 may include a water-resistant resin, and may be in the form of a film in which, for example, a polyolefin-based resin, a metal, a nylon resin, and a polyterephthalate resin are laminated.

A sealing portion 30 is formed by joining the edges of a case body 20 to prevent an electrode assembly 10 from being released from the case body 20. The method of forming a sealing portion 30 is not particularly limited, but a sealing portion may be formed by heat-welding a polyolefin-based resin formed on the inner surface of a case body 20.

A folding portion 31 may stably fix a sealing portion 30 to suppress deformation of the sealing portion 30 due to a gas generated inside a case, and delay a venting phenomenon. A folding portion 31 may be formed by folding one or more times in the direction of the center of a case body. For example, a folding portion 31 may be formed by folding an end portion of a sealing portion 32 by 90 degrees, 180 degrees, 270 degrees, or 360 degrees in the direction of the center of a case body.

The battery cell 100 may further include an electrolyte solution. An electrolyte solution may be a non-aqueous electrolyte solution. An electrolyte solution may include a lithium salt and an organic solvent. For example, the organic solvent may include one or more selected from the group consisting of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

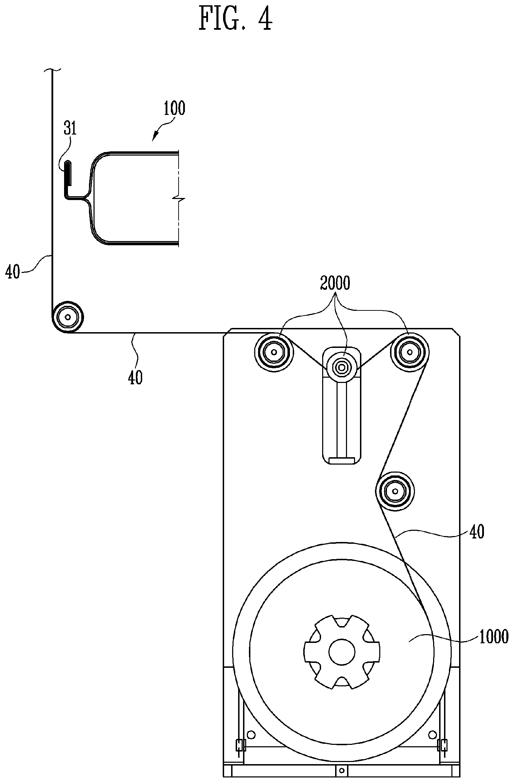

FIG. 4 schematically illustrates an operation of providing an attachment member to a side portion of a case body in which a folding portion is formed.

Referring to FIGS. 1 to 4, the method for manufacturing a battery cell includes an attachment member provision step S20. In Step S20, an attachment member 40 is provided to a side portion of a case body 20 in which a folding portion 31 is formed. Step S20 is a step of disposing an attachment member 40 on a side portion of a case body 20 to adhere the attachment member 40 to the side portion of the case body 20. More specifically, Step S20 may include withdrawing an attachment member 40 by a supply unit 1000, and a disposing the attachment member 40 withdrawn from the supply unit 1000 by a stage unit 2000 on a side portion of a case body 20.

A supply unit 1000 supplies an attachment member 40. The structure of a supply unit 1000 supplying an attachment member 40 is not particularly limited, but the frame of a supply unit 1000 is prepared in a cylindrical shape and has a rotatable structure so that an attachment member 40 may be wound in a roll shape on the outer surface of the frame. In addition, the attachment member 40 wound on the outer surface may be withdrawn by the rotation of the frame of the supply unit 1000.

A stage unit 2000 moves an attachment member 40 withdrawn from a supply unit 1000 to a side portion of a case body 20. The structure of a stage unit 2000 that moves an attachment member 40 is not particularly limited, but an attachment member 40 may be moved by a rotating member. In addition, the rotating members may be provided in a plural number, and each rotating member may be spaced apart from each other, and the last rotating member may be disposed at a position adjacent to a side portion of a case body 20.

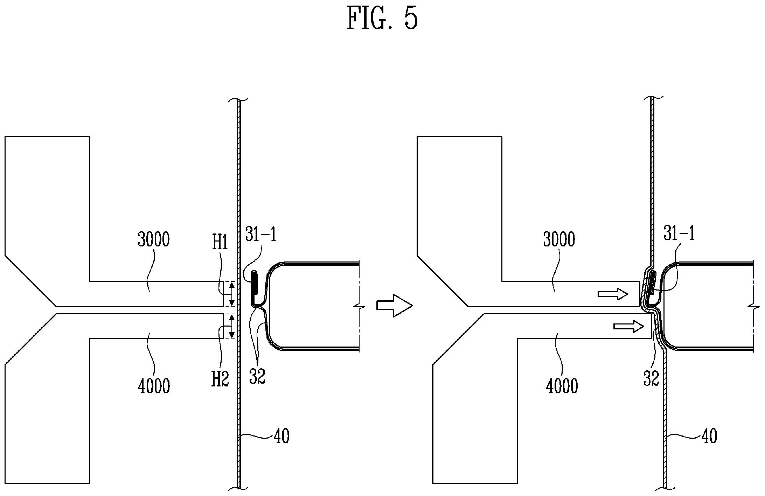

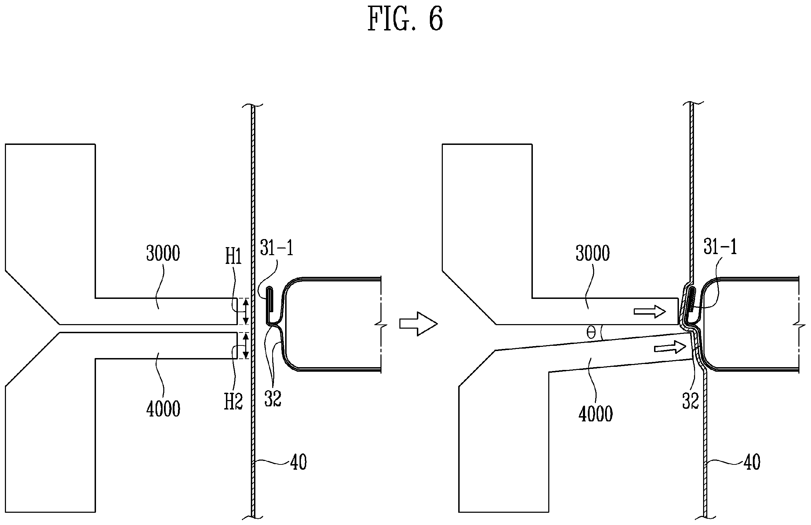

FIG. 5 schematically illustrates one embodiment of an operation of adhering an attachment member to a folding face positioned on the outermost side of a side portion of a case body by a first moving unit and a second moving unit, and FIG. 6 schematically illustrates another embodiment of the operation of adhering an attachment member to a folding face positioned on the outermost side of a side portion of a case body by a first moving unit and a second moving unit.

Referring to FIGS. 1 to 6, the method for manufacturing a battery cell includes a step S30 of adhering an attachment member to a folding face and a side face. In Step S30, an operation of adhering an attachment member 40 to a folding face 31-1 positioned on the outermost side of a case body 20 by a first moving unit 3000 and an operation of bonding an attachment member 40 to a side face 32 of the case body 20 by a second moving unit 4000 are performed.

Conventionally, an attachment member was adhered to a side portion of a case body by one moving unit, and then the remaining attachment member was attached to the upper and lower faces of the case body to form an attachment member at a folding portion of a battery cell. However, in batteries manufactured by the conventional manufacturing method, an empty space (air pocket) was formed between an attachment member and a case body, and a gap filler for cooling the battery cell was separated from the case body due to the empty space, which caused a problem that the cooling efficiency of the battery cell was reduced.

The present invention introduces an operation of adhering an attachment member 40 to a folding face 31-1 and a side face 32 in a side portion of a case body respectively by a first moving unit 3000 and a second moving unit 4000 that may be driven differently, so that the attachment member 40 may be tightly adhered along the folding face 31-1 and the side face 32 of the case body. In other words, in a battery cell 100 manufactured according to the manufacturing method of the present invention, an empty space (air pocket) is not formed between an attachment member 40 and a cup portion 21-1 accommodating an electrode assembly 10. As a result, in a battery module including the battery cell 100, a gap filler may come into contact with the cup portion 21-1 accommodating an electrode assembly 10, and thus there is an effect of improving the cooling efficiency of the battery cell 100.

In Step S30, an operation of adhering an attachment member 40 to a folding face 31-1 and an operation of adhering an attachment member 40 to a side face 32 may be performed simultaneously or sequentially. For example, in Step S30, after first adhering an attachment member 40 to a folding face 31-1, an operation of adhering an attachment member 40 to a side face 32 may be performed, or after first adhering an attachment member 40 to a side face 32, an operation of adhering an attachment member 40 to a folding face 31-1 may be performed.

The angle formed by a first moving unit 3000 and a second moving unit 4000 may be 0 to 30 degrees. When the angle range is satisfied, there is an effect of minimizing a spacing phenomenon between a folding face and a side face of a battery cell and an attachment member. The types of a first moving unit 3000 and a second moving unit 4000 are not particularly limited, and may be driven by a cylinder or a servo motor. An end portion of a first moving unit 3000 may be in contact with an attachment member 40, and the length H1 of the end portion of the first moving unit 3000 may correspond to the length of a folding face 31-1. The fact that the length H1 of the end portion of the first moving unit 3000 corresponds to the length of the folding face 31-1 does not necessarily mean that the length H1 of the end portion of the first moving unit 3000 is equal to the length of the folding face 31-1, but means the length H1 of the end portion at which an entire attachment member 40 may be tightly adhered to the folding face 31-1 by the first moving unit 3000. The end portion of a second moving unit 4000 may be in contact with an attachment member 40, and the length H2 of the end portion of the second moving unit 4000 may correspond to the length of a side face 32. The fact that the length H2 of the end portion of the second moving unit 4000 corresponds to the length of the side face 32 does not necessarily mean that the length H2 of the end portion of the second moving unit 4000 is equal to the length of the side face 32, but means the length H2 of the end portion at which an entire attachment member 40 may be tightly adhered to the side face 32 by the second moving unit 4000.

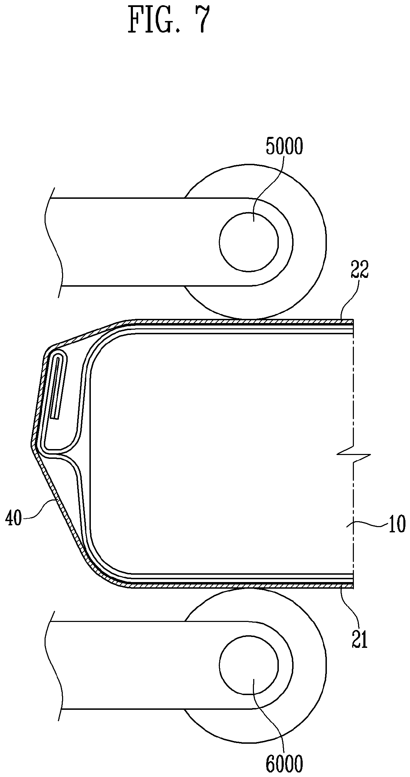

FIG. 7 schematically illustrates an operation of adhering an attachment member to an upper face and a lower face of a case by a roller unit.

Referring to FIGS. 1 to 7, the method for manufacturing a battery cell includes a step S40 of adhering an attachment member to an upper face and a lower face of a case body. In Step S40, a remaining attachment member 40 extended from an attachment member 40 adhered to a folding face 31-1 and a side face 32 of a case body 20 is adhered to an upper face and a lower face of a case body 20. More specifically, in Step S40, an attachment member 40 may be adhered to an upper face 22 of a case body 20 by a first roller unit 5000, and the attachment member 40 may be adhered to a lower face of the case body 20 by a second roller unit 6000. By adhering an attachment member 40 to an upper face and a lower face of a case body 20, a folding portion 31 may be stably supported by the attachment member 40, thereby preventing the folding portion 31 from unfolding.

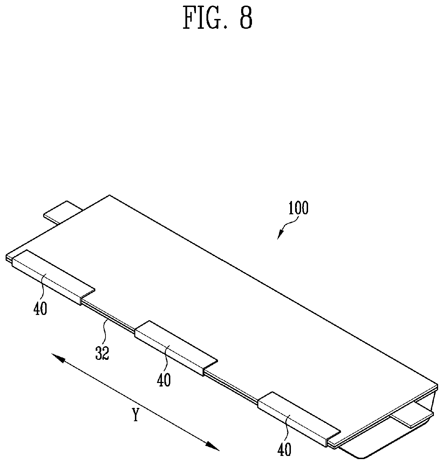

FIG. 8 schematically illustrates a battery cell in which multiple attachment members are disposed to be spaced apart from each other along the length direction of a sealing portion.

Referring to FIGS. 1 to 8, in the method for manufacturing a battery cell, Steps S10 to S40 may be repeatedly performed so that multiple attachment members 40 adhered to a battery cell 100 may be disposed to be spaced apart from each other along the length direction Y of a sealing portion 32. As attachment members 40 are disposed to be spaced apart from each other, even when a shape deformation occurs in which the case swells due to an increase in gas pressure, the occurrence of spacing between an attachment member 40 and a folding portion 31 may be minimized, and thus there is an effect of delaying a venting phenomenon in which the sealing of a sealing portion 30 is released.

A battery cell 100 manufactured by a manufacturing method according to the present invention includes an electrode assembly 10; a case body 20 accommodating the electrode assembly 10; a sealing portion 30 formed by joining the edges of the case body 20; a folding portion 31 formed by folding the sealing portion 30; and an attachment member 40 adhered on a side portion of the case body 20 in which the folding portion 31 is formed, wherein the attachment member 40 is tightly adhered along a folding face 31-1 positioned on the outermost side of the side portion of the case body 20 and a side face 32 of the case body 20.

A case body 20 may include a lower case 21 in which a cup portion 21-1 accommodating an electrode assembly 10 is formed, and an upper case 22 covering the lower case 21. A side face 32 of a case body 20 may include a side face of a lower case 21. In addition, an attachment member 40 may be adhered to the outer surface of a lower case 21 and the outer surface of a upper case 22. In addition, multiple attachment members 40 may be disposed to be spaced apart from each other along the length direction Y of a sealing portion 30. The features of an electrode assembly 10, a case body 20, and a cup portion 21-1 are the same as those of the electrode assembly 10, the case body 20, and the cup portion 21-1 described above in the method for manufacturing a battery cell 100.

An attachment member 40 is not particularly limited as long as it is a material having adhesiveness, but may preferably include an insulating resin. The thickness of an attachment member 40 may be 0.01 mm to 2.00 mm. When the thickness of an attachment member 40 is thinner than 0.01 mm, durability may be reduced, which may cause a problem that the attachment member is easily separated from a folding face, and when the thickness of the attachment member 40 is thicker than 2.00 mm, there may be a problem that the overall thickness of a battery cell is increased due to the thickness of the attachment member 40 itself. Therefore, as an attachment member 40, an insulating tape having a thickness of 0.01 mm to 2.00 mm that may provide insulation without increasing the overall thickness of a battery cell 100 due to its own thickness may be used.

A battery module according to the present invention includes the battery cell of the present invention as a unit cell.

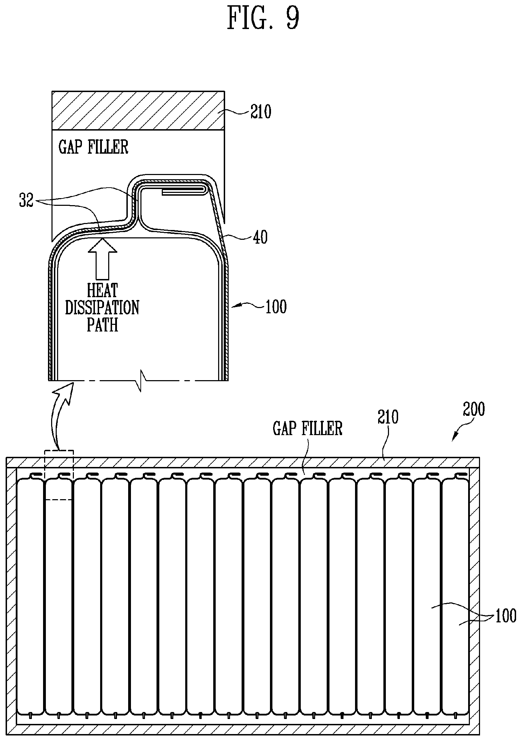

FIG. 9 shows a schematic cross-sectional diagram of a battery module including a plurality of battery cells according to one embodiment of the present invention.

Referring to FIG. 9, a battery module 200 may include a battery cell stack in which multiple battery cells 100 are stacked and a heat dissipation plate 210. In FIG. 8, battery cells 100 are illustrated as being stacked in the horizontal direction to form a battery cell stack, but are not limited thereto, and the battery cells 100 may be stacked in the vertical direction as needed.

A heat dissipation plate 210 may be disposed on the upper part, lower part, lateral part, and the like of a battery cell stack. A heat dissipation plate 210 may be a cooling plate, and a plurality of battery cells 100 may be cooled by a heat dissipation plate 210.

A battery module 200 may include a gap filler disposed between a battery cell 100 and a heat dissipation plate 210. A gap filler may be used to increase contact between a battery cell 100 and a heat dissipation plate 210, and may include a thermally conductive adhesive as needed. A gap filler may be filled to correspond to the shape of a attachment member 40 adhered along a side face 32 of a case body of a battery cell 100.

In a battery cell according to the present invention, an attachment member is tightly adhered along a folding face positioned on the outermost side of a side portion of a case body and a side face of the case body so that an empty space (air pocket) is not formed between the attachment member and a cup portion accommodating an electrode assembly. Accordingly, a gap filler can come into contact with the cup portion accommodating an electrode assembly, and thus there is the effect of improving the cooling efficiency of the battery cell.

### Example

An experiment was performed to confirm the heat dissipation effect according to the form of an attachment member adhered to a sealing portion of a battery cell. The difference in the temperature (°C) value in the battery module was confirmed between, as a first attachment member form, a battery cell having an attachment member formed on a folding portion and the outer surface of the upper and lower parts of a sheet, and as a second attachment member form, a battery cell having an attachment member formed to be tightly adhered along the folding portion and the side face of the case body.

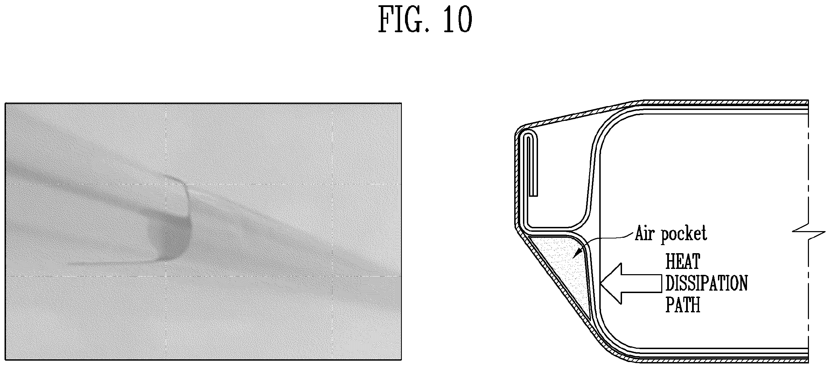

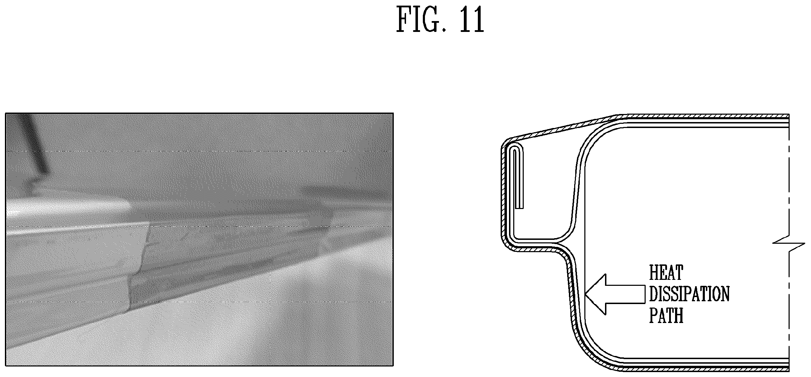

FIG. 10 shows a photographic image of the first attachment member form and schematically illustrates an adhesion structure of the attachment member, and FIG. 11 shows a photographic image of the second attachment member form and schematically illustrates an adhesion structure of the attachment member.

Table 1 below shows the measurement results of the highest temperature, lowest temperature, and average temperature values of battery modules including battery cells of the first attachment form and the second attachment form.

**[Table 1]**

| | Highest temperature (°C) | Lowest temperature (°C) | Average temperature (°C) |
|---|---|---|---|
| First attachment form (FIG. 9) | 73.8 | 25.2 | 51.1 |
| Second attachment form (FIG. 10) | 64.4 | 24.1 | 45.0 |

In the first attachment form, an empty space (air pocket) was formed between the attachment member and the case body, but in the second attachment form, the attachment member was tightly adhered along the folding face positioned at the outermost side of the case body and the side face of the case body, so that an empty space (air pocket) was not formed between the attachment member and the cup portion accommodating the electrode assembly.

As a result, the second attachment form exhibited lower values of highest temperature, lowest temperature, and average temperature values compared to the first attachment form, confirming the effect of improving the cooling efficiency of the battery cell due to the absence of empty space formation.

## Claims

1. A method for manufacturing a battery cell, comprising:
(a) preparing a battery cell including an electrode assembly, a case body accommodating the electrode assembly, a sealing portion formed by joining the edges of the case body, and a folding portion formed by folding the sealing portion;
(b) providing an attachment member on a side portion of the case body in which the folding portion is formed;
(c) performing an operation of adhering the attachment member of the Step (b) to a folding face positioned on the outermost side of the side portion of the case body by a first moving unit and an operation of adhering the attachment member of the Step (b) to a side face of the case body by a second moving unit; and
(d) adhering the remaining attachment member extended from the attachment member adhered to the folding face and the side face of the case body in the Step (c) to the upper face and the lower face of the case body.

2. The method according to claim 1, wherein the Step (b) includes: withdrawing the attachment member by a supply unit (b-1); and disposing the attachment member withdrawn in the Step (b-1) on the side portion of the case body by a stage unit (b-2).

3. The method according to claim 1, wherein, in the Step (c), the operation of adhering the attachment member of the Step (b) to the folding face and the operation of adhering the attachment member of the Step (b) to the side face are performed simultaneously or sequentially.

4. The method according to claim 1, wherein, in the Step (c), the first moving unit and the second moving unit are driven by a cylinder or a servo motor.

5. The method according to claim 1, wherein the angle formed by the first moving unit and the second moving unit in the Step (c) is 0 to 30 degrees.

6. The method according to claim 1, wherein, in the Step (c), the length of the end portion of the first moving unit in contact with the attachment member corresponds to the length of the folding face.

7. The method according to claim 1, wherein, in the Step (c), the length of the end portion of the second moving unit in contact with the attachment member corresponds to the length of the side face.

8. The method according to claim 1, wherein the attachment member is tightly adhered along the folding face and the side face of the case body by the operation of the Step (c).

9. The method according to claim 1, wherein the Step (d) is to adhere the attachment member to the upper face of the case body by a first roller unit and to adhere the attachment member to the lower face of the case body by a second roller unit.

10. The method according to claim 1, wherein, by repeatedly performing the Steps (a) to (d), the attachment member adhered to the battery cell is disposed in a multiple number to be spaced apart from each other along the length direction of the sealing portion.

11. A battery cell comprising:
an electrode assembly;
a case body accommodating the electrode assembly;
a sealing portion formed by joining the edges of the case body;
a folding portion formed by folding the sealing portion; and
an attachment member adhered on a side portion of the case body in which the folding portion is formed, wherein the attachment member is tightly adhered along a folding face positioned on the outermost side of the side portion of the case body and a side face of the case body.

12. The battery cell according to claim 11, wherein the case body includes a lower case in which a cup portion accommodating the electrode assembly is formed and an upper case covering the lower case.

13. The battery cell according to claim 12, wherein the side face of the case body includes a side face of the lower case.

14. The battery cell according to claim 12, wherein the attachment member is adhered to an outer surface of the lower case and an outer surface of the upper case.

15. The battery cell according to claim 11, wherein the attachment member is disposed in a multiple number to be spaced apart from each other along the length direction of the sealing portion.

16. A battery module comprising the battery cell according to claim 11 as a unit cell.

17. The battery module according to claim 16, wherein the battery module include a heat dissipation plate.

18. The battery module according to claim 17, wherein the battery module includes a gap filler disposed between the battery cell and the heat dissipation plate.

19. The battery module according to claim 18, wherein the gap filler is filled so as to correspond to the shape of an attachment member adhered along a side face of a case body of the battery cell.
